# EUROPÄISCHE PATENTSCHRIFT

(11) **EP 1 621 946 B1**
(45) Veröffentlichungstag und Bekanntmachung des Hinweises auf die Patenterteilung: **29.03.2017**
(21) Anmeldenummer: 04018121.6
(22) Anmeldetag: 30.07.2004
(51) Int. Cl.: G05B 19/05

(54) **Ablage von Projektierungsdaten in einem Automatisierungssystem**
Storing of project data in an automation system
Stockage de données de projet dans un système d'automatisation

(43) Veröffentlichungstag der Anmeldung: 01.02.2006
(73) Patentinhaber: Siemens Aktiengesellschaft, 80333 München (DE)
(72) Erfinder: Daimer, Martin, 91058 Erlangen (DE); Karl-Dietze, Ludwig, 90562 Heroldsberg (DE); Macher, Andreas, 92318 Neumarkt (DE); Prieler, Siegfried, 86660 Tapfheim (DE)

(56) Entgegenhaltungen:
- EP-A- 1 186 971
- WO-A-02/073326
- WO-A-03/040842
- DE-A- 10 116 809
- DE-A- 10 138 533

## Beschreibung

Die Erfindung betrifft ein System sowie ein Verfahren zur Ablage von Projektierungsdaten in einem Automatisierungssystem, welches Automatisierungsgeräte enthält.

Bei der Programmierung von Automatisierungssystemen, insbesondere industriellen Automatisierungssystemen, wird üblicherweise zwischen Projektierungsdaten und Laufzeitdaten unterschieden. Projektierungsdaten entstehen beim Engineeringprozess, z. B. durch Programmierung und Projektierung, und werden durch einen Übersetzungslauf in eine Form (z. B. Baustein) gewandelt, die auf Laufzeitseite wiederum interpretiert werden kann, um dort das Verhalten des Automatisierungssystems zu definieren. Die Laufzeit wird häufig auch mit dem englischen Begriff Runtime bezeichnet. Bei der Übersetzung der Projektierungsdaten werden in der Regel nur die für die Definition des Runtime-Systemverhaltens notwendigen Daten in Bausteine verpackt und geladen. Darüber hinaus besteht die Möglichkeit für das Engineering System, nicht ablaufrelevante Daten zusätzlich in den Runtime-Objekten abzulegen, die auf Runtimeseite nicht interpretiert werden. Projektierungsdaten belegen um Größenordnungen mehr Speicherplatz als die entsprechenden Laufzeitdaten. Aufgrund des hohen Bedarfs an nicht flüchtigem Speicherplatz werden die Projektierungsdaten deshalb üblicherweise getrennt von den Laufzeitdaten auf Programmiergeräten oder Rechnern abgelegt, da ein einzelnes Automatisierungsgerät in der Regel nicht den erforderlichen Speicherplatz besitzt, um die Informationen, die ein vollständiges Automatisierungsprojekt enthält, ablegen zu können. Diese physikalische Trennung von Projektierungsdaten und Laufzeitdaten hat zur Folge, dass eine Programmänderung und Fehlerbehebung am Automatisierungssystem nur durchgeführt werden kann, wenn das zum Automatisierungssystem passende Projekt mit den entsprechenden Projektierungsdaten vorliegt.

Die EP 1 186 971 A2 beschreibt ein Automatisierungssystem mit Automatisierungsgeräten zur Steuerung und/oder Regelung einer technischen Anlage, die mit Mitteln der elektronischen Datenverarbeitung betrieben werden, wobei im Automatisierungssystem Projektierungsdaten der Anlage zu verarbeiten sind. Es ist ein Speichermedium, z. B. eine Memory Card, für die Projektierungsdaten vorhanden, das der jeweiligen zentralen Steuereinheit (CPU) eines Automatisierungsgeräts zugeordnet ist.

Weiterhin ist aus der Offenlegungsschrift DE 101 16 809 A1 eine programmierbare Steuereinrichtung bekannt, welche eine sequentielle Verarbeitung durchführt in Übereinstimmung mit Ausführungscodes, die durch Kompilieren eines Steuerprogramms erzeugt werden.

Der Erfindung liegt die Aufgabe zugrunde, Änderungen innerhalb eines Automatisierungssystems zu vereinfachen.

Diese Aufgabe wird durch ein System mit den im Patentanspruch 1 genannten Merkmalen gelöst. Erfindungsgemäß wird ein System zur Ablage von Projektierungsdaten in einem Automatisierungssystem vorgeschlagen, welches Automatisierungsgeräte enthält, wobei die Projektierungsdaten in einem generischen, erweiterbaren Datenablageformat gespeichert sind, wobei Teile der Projektierungsdaten jeweils Laufzeitdaten zugeordnet sind, wobei den Laufzeitdaten jeweils mindestens ein Automatisierungsgerät zugeordnet ist, wobei die Laufzeitdaten auf den ihnen zugeordneten Automatisierungsgeräten ablauffähige Programmteile sind, wobei die Teile der Projektierungsdaten parallel zu den ihnen jeweils zugeordneten Laufzeitdaten in den den Laufzeitdaten jeweils zugeordneten Automatisierungsgeräten verteilt gespeichert sind.

Die Aufgabe wird durch ein Verfahren mit den Merkmalen gemäß Patentanspruch 10 gelöst. Bei dem erfindungsgemäßen Verfahren zur Ablage von Projektierungsdaten in einem Automatisierungssystem, welches Automatisierungsgeräte enthält, werden die Projektierungsdaten in einem generischen, erweiterbaren Datenablageformat gespeichert, werden Teile der Projektierungsdaten jeweils Laufzeitdaten zugeordnet, wird den Laufzeitdaten jeweils mindestens ein Automatisierungsgerät zugeordnet, sind die Laufzeitdaten auf den ihnen zugeordneten Automatisierungsgeräten ablauffähige Programmteile, werden die Teile der Projektierungsdaten parallel zu den ihnen jeweils zugeordneten Laufzeitdaten in den den Laufzeitdaten jeweils zugeordneten Automatisierungsgeräten verteilt gespeichert.

Laufzeitdaten werden bereits heute verteilt innerhalb eines Automatisierungssystems gespeichert. Jedes Automatisierungsgerät erhält die Laufzeitdaten, mit denen es entweder arbeiten soll oder die es an Automatisierungsgeräte verteilen soll, welche selbst keinen remanenten Speicher besitzen. Der Erfindung liegt die Idee zugrunde, die zu den Laufzeitdaten gehörigen Projektierungsdaten ebenfalls parallel zu diesen Laufzeitdaten auf die unterschiedlichen Automatisierungsgeräte zu verteilen. So wird der in dem Automatisierungssystem vorhandene Speicherplatz gleichmäßig und dezentralisiert genutzt. Damit wird das Risiko verringert, dass es bei einem einzelnen Automatisierungsgerät zu einem Speicherengpass kommen kann. Für den Anwender ergibt sich der Vorteil, dass die Laufzeitdaten und die zugeordneten Projektierungsdaten eine Einheit bilden. Sie lassen sich also auch bei Kommunikationsstörungen autark bearbeiten. Eine Aktualisierung eines Programms auf einem Automatisierungsgerät ist somit auch dann möglich, wenn die Kommunikation zu allen anderen Teilen des Automatisierungssystems nicht möglich ist. Ein Servicetechniker kann somit problemlos Modifikationen auf dem entsprechenden Automatisierungsgerät einspielen. Ist die Kommunikation innerhalb des Automatisierungssystems wieder voll funktionsfähig, so sind die eingespielten Modifikationen automatisch auch in der Gesamtprojektierung des Automatisierungssystems enthalten. Aus interner Sicht ist es vorteilhaft, dass die Lasten der zusätzlichen Projektierungsdaten gleichmäßig auf alle Automatisierungsgeräte verteilt werden können. Dadurch sinken die Anforderungen, die bei einer zentralen Datenhaltung bezüglich Ressourcenbedarf und Performance (sowohl Kommunikations-Performance als auch Performance für einen Runtimezugriff auf die Projektierungsdaten) an jedes einzelne Automatisierungsgerät zu stellen gewesen wären. Durch die Erfindung können somit die Hardwarekosten eines Automatisierungsgeräts reduziert werden.

Da beliebige Clients unterschiedlicher Hersteller auf die Projektierungsdaten zugreifen müssen, ist eine proprietäre Darstellungsform der Daten ungeeignet, wie im Folgenden erläutert. Üblicherweise sind Projektierungsdaten auf dem Automatisierungssystem in einem für die Erstellsoftware spezifischen und individuell wählbaren Format codiert abgelegt. Tool-Software, die auf diese Daten zugreifen will, muss zunächst dazu in der Lage sein, dieses Datenformat decodieren zu können. Des weiteren muss sie diese Daten auch interpretieren können. Beides ist aufgrund des damit verbundenen Aufwandes und aufgrund der daraus resultierenden Abhängigkeit von spezifischen Formaten der Erstellsoftware, die sich jederzeit ändern können, bisher nicht der Fall. Dadurch, dass es keine Projektierungsdaten in einem generischen Format gibt, können bisher viele Anwendungen, die einen Zugriff auf Projektierungsdaten voraussetzen, nicht realisiert werden. Das Problem wird bisher dadurch umgangen, dass für Anwendungen Sonderlösungen definiert werden; hier werden spezifische Daten zusätzlich zu den Laufzeitdaten in einem zwischen den beiden Partnern abgestimmten Format auf dem Automatisierungssystem abgelegt. Dies ist jedoch kein befriedigender Zustand: Zum einen muss für jede neue Anforderung ein neues Ablageformat und ein neuer Ablageort (Online-Hüllenobjekt, welches die Daten aufnimmt) definiert werden, zum anderen sind diese Schnittstellen wieder nur zwischen zwei Partnern abgestimmt. Weder die Interpretation der abgelegten Daten noch der Umfang der abgelegten Daten ist einem weiteren Nutzer ohne erneuten Aufwand und ohne Inkompatibilität zugänglich.

Die Erfindung löst das Problem durch die Ablage der Projektierungsdaten in einem generischen, erweiterbaren und durchgängigen Format direkt auf dem Automatisierungssystem. Das Format ermöglicht es, dass beliebige Tools diese Daten verstehen und selbstständig konsistent erweitern können. Da die Projektierungsdaten erfindungsgemäß in einem generischen, erweiterbaren Datenablageformat gespeichert sind, können im Automatisierungssystem vorliegende Projektierungsdaten generisch erweitert werden. Neue, zusätzliche Daten eines bereits bestehenden Teils der Projektierungsdaten, resultierend beispielsweise aus einem anderen Programm, welches diesen Teil der Projektierungsdaten ebenfalls verwendet, können einfach eingefügt werden, ohne die ursprünglichen Projektierungsdaten modifizieren zu müssen. Da das Datenformat generisch ist, kann es von beliebigen Projektierungssystemen genutzt werden, ohne dass diese spezifisches Wissen über bestimmte proprietäre Datenformate benötigen würden. Die bisherige Projektierung kann somit als Input verwendet werden, die Daten müssen nicht erneut eingegeben werden und können eventuell für Default-Einstellungen verwendet werden. Daten aus der bisherigen Programmierung können weiter verwendet werden, z.B. bei symbolischer Programmierung. Zudem kann auf bestehende Standards zurückgegriffen werden.

Gemäß einer vorteilhaften Ausgestaltung der Erfindung sind sämtliche Teile der Projektierungsdaten jeweils den entsprechenden Laufzeitdaten zugeordnet und sind sämtliche Teile der Projektierungsdaten parallel zu den ihnen jeweils zugeordneten Laufzeitdaten in den den Laufzeitdaten jeweils zugeordneten Automatisierungsgeräten verteilt gespeichert. Damit ist es also möglich, die Projektierungsdaten vollständig im Automatisierungssystem bzw. in den Automatisierungsgeräten des Automatisierungssystems abzulegen. Wenn ein Anwender Laufzeitdaten in ein Automatisierungssystem lädt, so werden die zu den Laufzeitdaten gehörigen Projektierungsdaten ebenfalls automatisch vom System mit abgelegt. Dadurch wird eine Speicherung auf andere Medien, z. B. der Festplatte eines PCs oder auf Sicherungsmedien wie einer CD-ROM oder einer DVD, nur noch zum Zwecke der Datensicherung benötigt.

Wenn Teile der Projektierungsdaten, die einer Mehrzahl von Laufzeitdaten zugeordnet sind, auf den dieser Mehrzahl von Laufzeitdaten zugeordneten Automatisierungsgeräten jeweils gespeichert sind, stehen einem Anwender bei Arbeitsvorgängen, die das Ändern oder Erweitern der Laufzeitdaten eines Automatisierungsgeräts betreffen, auch im Falle einer Kommunikationsstörung im Automatisierungssystem immer die zum jeweiligen Automatisierungsgerät passenden Laufzeit- und Projektierungsdaten zur Verfügung. Da diese Daten direkt im Automatisierungsgerät abgelegt sind, besteht für den Anwender keine Notwendigkeit, diese Daten auf einem externen Programmiergerät abzulegen. Er kann ein solches Programmiergerät mit dem jeweiligen Automatisierungsgerät verbinden und ist in der Lage, direkt mit den zu diesem Automatisierungsgerät passenden Projektierungsdaten zu arbeiten.

Um bei Kommunikationsstörungen sämtliche für ein Automatisierungsgerät relevanten Projektierungsdaten gerätelokal immer verfügbar zu haben, wird gemäß einer weiteren vorteilhaften Ausgestaltung der Erfindung vorgeschlagen, dass Teile der Projektierungsdaten, die keinen Laufzeitdaten zuzuordnen sind, auf allen Automatisierungsgeräten jeweils gespeichert sind. Die nicht einem Automatisierungsgerät zuzuordnenden Projektierungsdaten werden somit redundant auf allen Automatisierungsgeräten abgelegt. Dies erhöht die Speicherlast für das einzelne Automatisierungsgerät etwas, ermöglicht aber die Durchführung von Änderungen an jedem Automatisierungsgerät auch dann, wenn keine Kommunikationsverbindung zum Kommunikationsnetz des Automatisierungssystems besteht.

Gemäß einer weiteren vorteilhaften Ausgestaltung der Erfindung wird das Datenablageformat durch ein vordefiniertes Objektmodell, repräsentiert durch einen Projektbaum, und durch Schema-Definitionsdateien festgelegt. Durch ein solchermaßen definiertes Datenablageformat sind beliebige Tools, welche die Projektierungsdaten nutzen, in der Lage, diese zu interpretieren.

Die jederzeitige Verfügbarkeit von Änderungen und Aktualisierungen der Projektierungs- bzw. Laufzeitdaten wird sichergestellt, wenn gemäß einer weiteren vorteilhaften Ausgestaltung der Erfindung die Projektierungsdaten konsistent zu den ihnen jeweils zugeordneten Laufzeitdaten gespeichert sind. Dabei vereinfacht das Konzept der Speicherung der Projektierungsdaten bei dem zugehörigen Verursacher die Konsistenzsicherung.

Da die Projektierungsdaten in einem generischen, erweiterbaren Datenablageformat gespeichert werden, ist gemäß einer weiteren vorteilhaften Ausgestaltung der Erfindung vorgesehen, dass die Projektierungsdaten zum Austausch von Daten zwischen Applikationen dienen. Dabei konvertiert eine erste Applikation Daten in das Datenablageformat der Projektierungsdaten und speichert diese auf dem jeweiligen Automatisierungsgerät. Von dort können die gespeicherten Projektierungsdaten wiederum in dem Datenablageformat durch eine zweite Applikation gelesen und in ein für sie verwendbares Format konvertiert werden.

Der Speicherplatzbedarf eines Automatisierungsgeräts in einem Automatisierungssystem wird verringert, wenn die Projektierungsdaten gemäß einer weiteren vorteilhaften Ausgestaltung der Erfindung in komprimierter Form gespeichert werden.

Bekannte Mechanismen aus Business-Anwendungen können gemäß einer weiteren vorteilhaften Ausgestaltung der Erfindung genutzt werden, wenn das Datenablageformat in einer erweiterbaren Auszeichnungssprache, insbesondere dem standardisierten Format XML (XML = Extensible Markup Language), definiert ist.

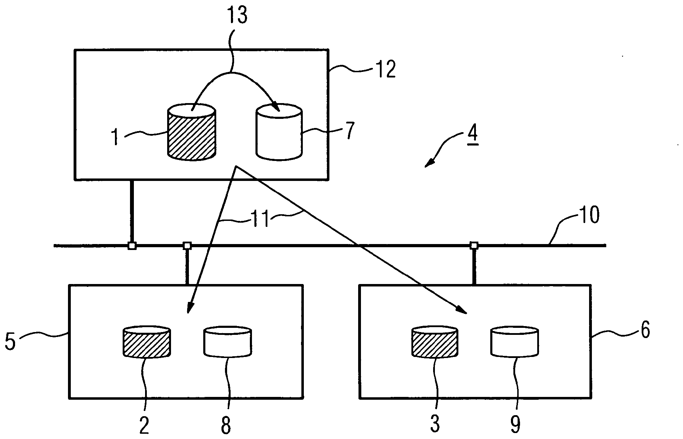

Nachfolgend wird die Erfindung anhand des in der Figur dargestellten Ausführungsbeispiels näher beschrieben und erläutert. Die Figur zeigt ein Automatisierungssystem 4, welches über ein Kommunikationsnetz 10, z. B. ein Bussystem, verbundene Automatisierungsgeräte 5, 6 enthält. An das Kommunikationsnetz 10 ist zudem ein Rechner 12, z.B. ein mobiles Programmiergerät, angeschlossen. Der Rechner 12 selbst ist nicht Teil des Automatisierungssystems 4. Mit Hilfe des Rechners 12 erstellt ein Anwender Projektierungsdaten 1, welche in einem Konvertierungsschritt 13 in Laufzeitdaten 7 umgewandelt werden. Die Laufzeitdaten 7 enthalten ablauffähige Programmteile, welche z.B. ein Steuerungsprogramm innerhalb des Automatisierungssystems 4 darstellen. Die Projektierungsdaten 1 liegen in einem generischen, erweiterbaren Datenablageformat vor. Teile 2, 3 der Projektierungsdaten 1 sind jeweils bestimmten Teilen 8, 9 der Laufzeitdaten 7 zugeordnet. Die Teile 8, 9 der Laufzeitdaten 7 sind wiederum jeweils einem Automatisierungsgerät 5 bzw. 6 zugeordnet. Durch die mit dem Bezugszeichen 11 gekennzeichneten Pfeile wird der Vorgang der Speicherung der Teile 2, 3 der Projektierungsdaten bzw. der Teile 8, 9 der Laufzeitdaten gekennzeichnet. Die Teile 2, 3 der Projektierungsdaten werden dabei parallel zu den ihnen jeweils zugeordneten Laufzeitdaten 8, 9 in den den Laufzeitdaten 8, 9 jeweils zugeordneten Automatisierungsgeräten 5, 6 verteilt gespeichert.

Ein weiteres Ausführungsbeispiel ist die Inbetriebnahme eines industriellen Automatisierungssystems. Dazu legt ein Anwender in einem Projektierungssystem ein neues Projekt an. Die Projektierungsdaten werden erzeugt, Bausteine werden programmiert und dann werden die Projektierungsdaten zusammen mit den Laufzeitdaten auf dem Automatisierungssystem abgelegt. Bei dieser Aktion werden die Projektierungsdaten in ein generisches Format konvertiert, dem jeweiligen passenden Laufzeitsystem zugeordnet, in Bausteine verpackt und geladen. Im Automatisierungssystem liegen nun also die kompletten Projektinformationen. Sollen nun weitere Aktionen mit dem Automatisierungssystem durchgeführt werden (Wartung, Pflege, Erweiterung, Bedienen und Beobachten, etc.) so können beliebige Applikationen auf die vorhandenen Projektierungsdaten zugreifen. Im Gegensatz zum Stand der Technik brauchen die Applikationen keinerlei Wissen über interne Datenablagestrukturen, ebenso kann es nicht vorkommen, dass wichtige Daten fehlen, weil sie einfach nicht mit abgelegt worden waren. Eine einfache Interpretation der im Automatisierungssystem in Speichern der Automatisierungsgeräte abgelegten Projektierungsdaten reicht aus: Jede Information, die in der Projektierung vorhanden war, ist auch hier vorhanden.

Zusammengefasst betrifft die Erfindung somit ein System sowie ein Verfahren zur Ablage von Projektierungsdaten 1, 2, 3 in einem Automatisierungssystem 4, welches Automatisierungsgeräte 5, 6 enthält. Um Änderungen innerhalb des Automatisierungssystems 4 zu vereinfachen, sind die Projektierungsdaten 1, 2, 3 in einem generischen, erweiterbaren Datenablageformat gespeichert sind, wobei Teile der Projektierungsdaten 1, 2, 3 jeweils Laufzeitdaten 7, 8, 9 zugeordnet sind, wobei den Laufzeitdaten 7, 8, 9 jeweils mindestens ein Automatisierungsgerät 5, 6 zugeordnet ist, wobei die Laufzeitdaten 7, 8, 9 auf den ihnen zugeordneten Automatisierungsgeräten 5, 6 ablauffähige Programmteile sind und wobei die Teile der Projektierungsdaten 1, 2, 3 parallel zu den ihnen jeweils zugeordneten Laufzeitdaten 7, 8, 9 in den den Laufzeitdaten 7, 8, 9 jeweils zugeordneten Automatisierungsgeräten 5, 6 verteilt gespeichert sind.

## Patentansprüche

1. System mit einem Rechner (12) zur Ablage von Projektierungsdaten (1, 2, 3) in einem Automatisierungssystem (4), welches Automatisierungsgeräte (5, 6) enthält,
• wobei die Projektierungsdaten (1, 2, 3) in einem generischen, erweiterbaren Datenablageformat gespeichert sind, wobei das Datenablageformat durch ein vordefiniertes Objektmodell, repräsentiert durch einen Projektbaum, und durch Schema-Definitionsdateien festgelegt ist,
• wobei Teile der Projektierungsdaten (1, 2, 3) jeweils Laufzeitdaten (7, 8, 9) zugeordnet sind, und wobei die Projektierungsdaten (1, 2, 3) mithilfe des Rechners (12) erstellt und in einem Konvertierungsschritt (13) in die Laufzeitdaten (7, 8, 9) umgewandelt wurden,
• wobei den Laufzeitdaten (7, 8, 9) jeweils mindestens ein Automatisierungsgerät (5, 6) zugeordnet ist,
• wobei die Laufzeitdaten (7, 8, 9) auf den ihnen zugeordneten Automatisierungsgeräten (5, 6) ablauffähige Programmteile sind,
• wobei die Teile der Projektierungsdaten (1, 2, 3) parallel zu den ihnen jeweils zugeordneten Laufzeitdaten (7, 8, 9) in den den Laufzeitdaten (7, 8, 9) jeweils zugeordneten Automatisierungsgeräten (5, 6) verteilt gespeichert sind,
• wobei Teile der Projektierungsdaten (1, 2, 3), die einer Mehrzahl von Laufzeitdaten (7, 8, 9) zugeordnet sind, auf den dieser Mehrzahl von Laufzeitdaten (7, 8, 9) zugeordneten Automatisierungsgeräten (5, 6) jeweils gespeichert sind, und
• wobei Teile der Projektierungsdaten (1, 2, 3), die keinen Laufzeitdaten (7, 8, 9) zuzuordnen sind, auf allen Automatisierungsgeräten (5, 6) jeweils gespeichert sind.

2. System nach Anspruch 1,
**dadurch gekennzeichnet,**
**dass** sämtliche Teile der Projektierungsdaten (1, 2, 3) jeweils Laufzeitdaten (7, 8, 9) zugeordnet sind und dass sämtliche Teile der Projektierungsdaten (1, 2, 3) parallel zu den ihnen jeweils zugeordneten Laufzeitdaten (7, 8, 9) in den den Laufzeitdaten (7, 8, 9) jeweils zugeordneten Automatisierungsgeräten (5, 6) verteilt gespeichert sind.

3. System nach einem der vorhergehenden Ansprüche,
**dadurch gekennzeichnet,**
**dass** die Projektierungsdaten (1, 2, 3) konsistent zu den ihnen jeweils zugeordneten Laufzeitdaten (7, 8, 9) gespeichert sind.

4. System nach einem der vorhergehenden Ansprüche,
**dadurch gekennzeichnet,**
**dass** die Projektierungsdaten (1, 2, 3) zum Austausch von Daten zwischen Applikationen dienen.

5. System nach einem der vorhergehenden Ansprüche,
**dadurch gekennzeichnet,**
**dass** die Projektierungsdaten (1, 2, 3) in komprimierter Form gespeichert sind.

6. System nach einem der vorhergehenden Ansprüche,
**dadurch gekennzeichnet,**
**dass** das Datenablageformat in einer erweiterbaren Auszeichnungssprache, insbesondere XML, definiert ist.

7. Verfahren zur Ablage von Projektierungsdaten (1, 2, 3) in einem Automatisierungssystem (4), welches Automatisierungsgeräte (5, 6) enthält,
- bei welchem die Projektierungsdaten (1, 2, 3) mittels eines Rechners (12) erstellt und in einem generischen, erweiterbaren Datenablageformat gespeichert werden, wobei das Datenablageformat durch ein vordefiniertes Objektmodell, repräsentiert durch einen Projektbaum, und durch Schema-Definitionsdateien festgelegt ist,
- Teile der Projektierungsdaten (1, 2, 3) jeweils Laufzeitdaten (7, 8, 9) zugeordnet werden, wobei die Laufzeitdaten (7, 8, 9) mittels Umwandlung in einem Konvertierungsschritt (13) aus den Projektierungsdaten (1, 2, 3) erstellt werden,
- den Laufzeitdaten (7, 8, 9) jeweils mindestens ein Automatisierungsgerät (5, 6) zugeordnet wird,
- die Laufzeitdaten (7, 8, 9) auf den ihnen zugeordneten Automatisierungsgeräten (5, 6) ablauffähige Programmteile sind, die Teile der Projektierungsdaten (1, 2, 3) parallel zu den ihnen jeweils zugeordneten Laufzeitdaten (7, 8, 9) in den den Laufzeitdaten (7, 8, 9) jeweils zugeordneten Automatisierungsgeräten (5, 6) verteilt gespeichert werden,
- und bei welchem Teile der Projektierungsdaten (1, 2, 3), die einer Mehrzahl von Laufzeitdaten (7, 8, 9) zugeordnet sind, auf den dieser Mehrzahl von Laufzeitdaten (7, 8, 9) zugeordneten Automatisierungsgeräten (5, 6) jeweils gespeichert werden und
- Teile der Projektierungsdaten (1, 2, 3), die keinen Laufzeitdaten (7, 8, 9) zuzuordnen sind, auf allen Automatisierungsgeräten (5, 6) jeweils gespeichert werden.

8. Verfahren nach Anspruch 7,
**dadurch gekennzeichnet,**
**dass** sämtliche Teile der Projektierungsdaten (1, 2, 3) jeweils Laufzeitdaten (7, 8, 9) zugeordnet werden und dass sämtliche Teile der Projektierungsdaten (1, 2, 3) parallel zu den ihnen jeweils zugeordneten Laufzeitdaten (7, 8, 9) in den den Laufzeitdaten (7, 8, 9) jeweils zugeordneten Automatisierungsgeräten (5, 6) verteilt gespeichert werden.

9. Verfahren nach einem der Ansprüche 7 bis 8,
**dadurch gekennzeichnet,**
**dass** die Projektierungsdaten (1, 2, 3) konsistent zu den ihnen jeweils zugeordneten Laufzeitdaten (7, 8, 9) gespeichert werden.

10. Verfahren nach einem der Ansprüche 7 bis 9,
**dadurch gekennzeichnet,**
**dass** mit den Projektierungsdaten (1, 2, 3) Daten zwischen Applikationen ausgetauscht werden.

11. Verfahren nach einem der Ansprüche 7 bis 10,
**dadurch gekennzeichnet,**
**dass** die Projektierungsdaten (1, 2, 3) in komprimierter Form gespeichert werden.

12. Verfahren nach einem der Ansprüche 7 bis 11,
**dadurch gekennzeichnet,**
**dass** das Datenablageformat in einer erweiterbaren Auszeichnungssprache, insbesondere XML, definiert ist.

## Claims

1. System with a computer (12) for storage of project-planning data (1, 2, 3) in an automation system (4) which contains automation devices (5, 6),
• wherein the project-planning data (1, 2, 3) is stored in a generic expandable data storage format, wherein the data storage format is determined by a predefined object model, represented by a project tree and by schema definition files,
• wherein parts of the project-planning data (1, 2, 3) are each assigned runtime data (7, 8, 9), and wherein the project-planning data (1, 2, 3) is created with the aid of the computer (12) and is converted in a conversion step (13) into the runtime data (7, 8, 9),
• wherein the runtime data (7, 8, 9) is assigned at least one automation device (5, 6) in each case,
• wherein the runtime data (7, 8, 9) is parts of programs executable on the automation devices (5, 6) assigned to it,
• wherein the parts of the project-planning data (1, 2, 3) are stored distributed in parallel to the runtime data (7, 8, 9) assigned to them in each case in the automation devices (5, 6) assigned to the runtime data (7, 8, 9) in each case,
• wherein parts of the project-planning data (1, 2, 3) which are assigned to a plurality of runtime data (7, 8, 9) are stored in each case on the automation devices (5, 6) assigned to this plurality of runtime data (7, 8, 9), and
• wherein parts of the project-planning data (1, 2, 3), which are not to be assigned to any runtime data (7, 8, 9), are stored on all automation devices (5, 6) in each case.

2. System according to claim 1,
**characterised in that**
all parts of the project-planning data (1, 2, 3) are assigned runtime data (7, 8, 9) in each case and that all parts of the project-planning data (1, 2, 3) are stored distributed in parallel to the runtime data (7, 8, 9) assigned to them in each case in the automation devices (5, 6) assigned to the runtime data (7, 8, 9) in each case.

3. System according to one of the preceding claims,
**characterised in that**
the project-planning data (1, 2, 3) is stored so that is consistent with the runtime data (7, 8, 9) assigned to it in each case.

4. System according to one of the preceding claims,
**characterised in that**
the project-planning data (1, 2, 3) is used for exchange of data between applications.

5. System according to one of the preceding claims,
**characterised in that**
the project-planning data (1, 2, 3) is stored in compressed form.

6. System according to one of the preceding claims,
**characterised in that**
the data storage format is defined in an extensible markup language, especially XML.

7. Method for storage of project-planning data (1, 2, 3) in an automation system (4) containing automation devices (5, 6),
- in which the project-planning data (1, 2, 3) is created by means of a computer (12) and stored in a generic, expandable data storage format, wherein the data storage format is determined by a predefined object model, represented by a project tree and by schema definition files,
- parts of the project-planning data (1, 2, 3) are assigned to runtime data (7, 8, 9) in each case, wherein the runtime data (7, 8, 9) is created by means of conversion in a conversion step (13) from the project-planning data (1, 2, 3),
- the runtime data (7, 8, 9) is assigned at least one automation device (5, 6) in each case,
- the runtime data (7, 8, 9) on the automation devices assigned to it is executable program parts, the parts of the project-planning data (1, 2, 3) are stored distributed in parallel to the runtime data (7, 8, 9) assigned to it in each case in the relevant automation devices (5, 6) assigned to the runtime data,
- and in which parts of the project-planning data (1, 2, 3) which are assigned to a plurality of runtime data (7, 8, 9) are stored in each case on the automation devices (5, 6) assigned to this plurality of runtime data (7, 8, 9) and
- parts of the project-planning data (1, 2, 3), which are not to be assigned to any runtime data (7, 8, 9), are stored on all automation devices (5, 6) in each case.

8. Method according to claim 7,
**characterised in that**
all parts of the project-planning data (1, 2, 3) are assigned runtime data (7, 8, 9) in each case and that all parts of the project planning data (1, 2, 3) are stored distributed in parallel to the runtime data (7, 8, 9) assigned to them in each case in the automation devices (5, 6) assigned to the runtime data (7, 8, 9) in each case.

9. Method according to one of claims 7 to 8,
**characterised in that**
the project-planning data (1, 2, 3) is stored so that is consistent with the runtime data (7, 8, 9) assigned to it in each case.

10. Method according to one of claims 7 to 9,
**characterised in that**
data is exchanged between applications with the project-planning data (1, 2, 3).

11. Method according to one of claims 7 to 10,
**characterised in that**
the project-planning data (1, 2, 3) is stored in compressed form.

12. Method according to one of claims 7 to 11,
**characterised in that**
the data storage format is defined in an extensible markup language, especially XML.

## Revendications

1. Système comprenant un ordinateur (12) pour le stockage de données de projet (1, 2, 3) dans un système d'automatisation (4) qui comporte des appareils d'automatisation (5, 6),
- les données de projet (1, 2, 3) étant enregistrées dans un format de stockage de données extensible générique, le format de stockage de données étant déterminé par un modèle objet prédéfini, représenté par un arbre à projet, et par des fichiers de définition de schéma,
- des parties des données de projet (1, 2, 3) étant à chaque fois associées à des données de durée d'exécution (7, 8, 9) et les données de projet (1, 2, 3) ayant été établies à l'aide de l'ordinateur (12) et converties en les données de durée d'exécution (7, 8, 9) dans une étape de conversion (13),
- au moins un appareil d'automatisation (5, 6) à chaque fois étant associé aux données de durée d'exécution (7, 8, 9),
- les données de durée d'exécution (7, 8, 9) étant des parties de programme pouvant se dérouler sur les appareils d'automatisation (5, 6) qui leur sont associés,
- les parties des données de projet (1, 2, 3) faisant l'objet, parallèlement aux données de durée d'exécution (7, 8, 9) qui leur sont respectivement associées, d'un enregistrement réparti dans les appareils d'automatisation (5, 6) à chaque fois associés aux données de durée d'exécution (7, 8, 9),
- des parties des données de projet (1, 2, 3) associées à une pluralité de données de durée d'exécution (7, 8, 9) étant à chaque fois enregistrées sur les appareils d'automatisation (5, 6) associés à cette pluralité de données de durée d'exécution (7, 8, 9), et
- des parties des données de projet (1, 2, 3) qui ne sont à associer à aucunes données de durée d'exécution (7, 8, 9) étant à chaque fois enregistrées sur tous les appareils d'automatisation (5, 6).

2. Système selon la revendication 1,
**caractérisé en ce que** la totalité des parties des données de projet (1, 2, 3) est à chaque fois associée à des données de durée d'exécution (7, 8, 9) et **en ce que** la totalité des parties des données de projet (1, 2, 3) fait l'objet, parallèlement aux données de durée d'exécution (7, 8, 9) qui leur sont respectivement associées, d'un enregistrement réparti dans les appareils d'automatisation (5, 6) à chaque fois associés aux données de durée d'exécution (7, 8, 9).

3. Système selon l'une des revendications précédentes,
**caractérisé en ce que** les données de projet (1, 2, 3) sont enregistrées conformément aux données de durée d'exécution (7, 8, 9) qui leur sont respectivement associées.

4. Système selon l'une des revendications précédentes,
**caractérisé en ce que** les données de projet (1, 2, 3) servent à échanger des données entre des applications.

5. Système selon l'une des revendications précédentes,
**caractérisé en ce que** les données de projet (1, 2, 3) sont enregistrées sous forme compressée.

6. Système selon l'une des revendications précédentes,
**caractérisé en ce que** le format de stockage de données est défini dans un langage de balisage extensible, notamment XML.

7. Procédé de stockage de données de projet (1, 2, 3) dans un système d'automatisation (4) qui comporte des appareils d'automatisation (5, 6),
- dans lequel les données de projet (1, 2, 3) sont établies au moyen d'un ordinateur (12) et sont enregistrées dans un format de stockage de données extensible générique, le format de stockage de données étant déterminé par un modèle objet prédéfini, représenté par un arbre à projet, et par des fichiers de définition de schéma,
- des parties des données de projet (1, 2, 3) sont à chaque fois associées à des données de durée d'exécution (7, 8, 9), les données de durée d'exécution (7, 8, 9) étant établies à partir des données de projet (1, 2, 3) au moyen d'une conversion dans une étape de conversion (13),
- au moins un appareil d'automatisation (5, 6) à chaque fois est associé aux données de durée d'exécution (7, 8, 9),
- les données de durée d'exécution (7, 8, 9) sont des parties de programme pouvant se dérouler sur les appareils d'automatisation (5, 6) qui leur sont associés, les parties des données de projet (1, 2, 3) font l'objet, parallèlement aux données de durée d'exécution (7, 8, 9) qui leur sont respectivement associées, d'un enregistrement réparti dans les appareils d'automatisation (5, 6) à chaque fois associés aux données de durée d'exécution (7, 8, 9),
- et dans lequel des parties des données de projet (1, 2, 3) associées à une pluralité de données de durée d'exécution (7, 8, 9) sont à chaque fois enregistrées sur les appareils d'automatisation (5, 6) associés à cette pluralité de données de durée d'exécution (7, 8, 9), et
- des parties des données de projet (1, 2, 3) qui ne sont à associer à aucunes données de durée d'exécution (7, 8, 9) sont à chaque fois enregistrées sur tous les appareils d'automatisation (5, 6).

8. Procédé selon la revendication 7, **caractérisé en ce que** la totalité des parties des données de projet (1, 2, 3) est à chaque fois associée à des données de durée d'exécution (7, 8, 9) et **en ce que** la totalité des parties des données de projet (1, 2, 3) fait l'objet, parallèlement aux données de durée d'exécution (7, 8, 9) qui leur sont respectivement associées, d'un enregistrement réparti dans les appareils d'automatisation (5, 6) à chaque fois associés aux données de durée d'exécution (7, 8, 9).

9. Procédé selon l'une des revendications 7 à 8, **caractérisé en ce que** les données de projet (1, 2, 3) sont enregistrées conformément aux données de durée d'exécution (7, 8, 9) qui leur sont respectivement associées.

10. Procédé selon l'une des revendications 7 à 9, **caractérisé en ce que** des données sont échangées entre des applications à l'aide des données de projet (1, 2, 3).

11. Procédé selon l'une des revendications 7 à 10, **caractérisé en ce que** les données de projet (1, 2, 3) sont enregistrées sous forme compressée.

12. Procédé selon l'une des revendications 7 à 11, **caractérisé en ce que** le format de stockage de données est défini dans un langage de balisage extensible, notamment XML.
